# EUROPEAN PATENT APPLICATION

(11) **EP 4 751 681 A1**
(43) Date of publication of application: **03.06.2026**
(21) Application number: 24816901.3
(22) Date of filing: 07.11.2024
(51) Int. Cl.: A61C 17/28, A61C 17/34, A61C 17/22, A61C 15/00, A61H 23/02, A46B 5/02, H02K 7/10, H02K 7/06, H02K 7/14

(54) **PERSONAL CARE DEVICE AND CLEANING PART**

(30) Priority: 29.09.2024 CN 202411378103
(71) Applicant: Shenzhen Soocas Technology Co., Ltd., Shenzhen, Guangdong 518055 (CN)
(72) Inventor: LI, Zhoujian, Shenzhen, Guangdong 518055 (CN)
(74) Representative: Keltie LLP
(86) International application number: PCT/CN2024/130538
(87) International publication number: WO 2026/065671

(57) **Abstract**

The present disclosure relates to a personal care device and a cleaning component, where the personal care device includes a cleaning component, a grip component, and a transmission mechanism. The cleaning component includes at least two cleaning units. The grip component includes a driving unit and a control unit arranged therein, where the driving unit is configured to output an initial motion in response to one or more control signals sent by the control unit. The transmission mechanism is attached to the driving unit, the transmission mechanism is connected to the cleaning unit for transmission and is configured to convert the initial motion outputted by the driving unit for at least one cleaning unit, to drive the at least two cleaning units to move in two motion modes. With the personal care device according to the present disclosure, at least two cleaning units can move in two motion modes, achieving deep and efficient cleaning of various cleaning surfaces/grooves and other areas in the oral cavity, thereby meeting the diverse cleaning needs inside the oral cavity.

## Description

The present application claims priority to Chinese Patent Application No. 202411378103.1, titled "PERSONAL CARE DEVICE AND CLEANING COMPONENT ", filed on September 29, 2024 with the National Intellectual Property Administration, PRC, which is incorporated herein by reference in its entirety.

### FIELD

The present disclosure relates to the technical field of electrical appliance, and in particular to a personal care device and a cleaning component.

### BACKGROUND

Currently, most electric toothbrushes on the market adopt the open-loop direct drive control technology, for example, by using an eccentric wheel motor, a sonic motor, and a linear motor, to drive a brush head to perform high-frequency reciprocating vibration or a rotational motion for oral cleaning.

However, existing products configured with single function brush head are difficult to meet the diverse cleaning needs in the oral cavity, for example, different shapes and positions of teeth, tooth surfaces, and grooves have different cleaning needs.

### SUMMARY

Accordingly, a personal care device and a cleaning component are provided according to embodiments of the present disclosure, to solve the technical defects in the conventional art.

To achieve the above object, the following technical solutions are adopted in the present disclosure.

According to a first aspect of the present disclosure, a personal care device is provided according to the present disclosure, which includes:
a cleaning component, including at least two cleaning units;
a grip component, including a driving unit and a control unit arranged therein, where the driving unit is configured to output an initial motion in response to one or more control signals sent by the control unit; and
a transmission mechanism attached to the driving unit, where the transmission mechanism is connected to the cleaning units, and configured to convert the initial motion outputted by the driving unit to at least one cleaning unit, to drive the at least two cleaning units to respectively move in two different motion modes.

In an embodiment of the present disclosure, in the personal care device, the control unit is configured to determine a driving parameter in response to a trigger signal; the driving unit is configured to output the initial motion based on the driving parameter determined by the control unit.

In an embodiment of the present disclosure, the personal care device further includes a sensing unit, where the sensing unit is electrically connected to the control unit, and the control unit is configured to adjust the driving parameter in response to an electrical signal of the sensing unit, to maintain the driving unit at an initial motion state.

In an embodiment of the present disclosure, the driving unit includes a driving shaft, and the driving parameter includes but is not limited to: a rotation angle of the driving shaft, a rotation direction of the driving shaft, a reciprocating rotation frequency of the driving shaft, and/or a target position of the driving shaft.

In an embodiment of the present disclosure, the initial motion is in a multi-mode form, and comprises but is not limited to: a x-y axis composite motion, a circumferential-axial composite motion, and two-circumferential composite motion, where the x-y axis composite motion is an independent or coordinated composite motion in an x-axis direction and a y-axis direction, the circumferential-axial composite motion is an independent or coordinated composite motion of a rotational motion and a displacement motion in a predetermined axis extension direction, and the two-circumferential composite motion comprises motions along two circumferential paths.

In an embodiment of the present disclosure, the transmission mechanism includes at least a first transmission unit and a second transmission unit, and the cleaning component includes at least a first cleaning unit and a second cleaning unit; the first transmission unit is configured to convert the initial motion into a first motion to drive the first cleaning unit to perform a first cleaning action; the second transmission unit is configured to convert the initial motion into a second motion or transmits the initial motion to the second cleaning unit, to drive the second cleaning unit to perform a second cleaning action; and the first cleaning unit and the second cleaning unit have different motion modes.

In an embodiment of the present disclosure, the first motion and the second motion have at least one of the following differences: different motion paths, different motion frequencies, different reciprocating motion angles, and different motion strokes; and/or the motion modes of the first cleaning unit and the second cleaning unit have at least one of the following differences: different motion paths, different motion frequencies, different reciprocating motion angles, and different motion strokes; and/or the motion modes of the first cleaning action and the second cleaning action have at least one of the following differences: different motion paths, different motion frequencies, different reciprocating motion angles, and different motion strokes.

In an embodiment of the present disclosure, the first transmission unit and the second transmission unit are integrally formed or are assembled together to form the transmission mechanism.

In an embodiment of the present disclosure, the first transmission unit and the second transmission unit are connected to the driving unit for performing transmission, and the first transmission unit and the second transmission unit are configured to perform transmission independently of each other.

In an embodiment of the present disclosure, the motion path includes but is not limited to: a pivot path, a reciprocating rotation path, a tapping motion path, a reciprocating vibration path, a reciprocating sweeping path, a transverse linear motion, a longitudinal linear motion, and/or a pendulum motion. The pivot path is a path for rotating around a fulcrum or a pivot axis, the tapping motion path is a motion trajectory of a tapping point during a process of moving from a starting point to a contact point, the transverse linear motion is a transverse motion based on an extension axis of the personal care device or the driving unit, and the longitudinal linear motion is a longitudinal motion based on the extension axis of the personal care device or the driving unit.

In an embodiment of the present disclosure, the cleaning unit further includes one or more receiving units that cooperate with the transmission mechanism, and the one or more receiving units are driven by the transmission mechanism to drive one or more cleaning units to perform cleaning actions.

In an embodiment of the present disclosure, the transmission mechanism is configured to transmit the initial motion to one of the multiple cleaning units, so that the one cleaning unit performs a cleaning action.

In an embodiment of the present disclosure, the initial motion is a periodic motion, and the periodic motion includes different motion combinations with at least one or more of the following parameters: a rotation angle of the driving shaft, a rotation direction of the driving shaft, and a reciprocating rotation frequency of the driving shaft.

According to a second aspect of the present disclosure, a cleaning component is provided according to the present disclosure. The cleaning component is connected to a driving unit in a grip component for cleaning the oral cavity. The cleaning unit includes at least two cleaning units and a transmission mechanism. The transmission mechanism is connected to the cleaning units and configured to convert an initial motion outputted by the driving unit for at least one cleaning unit, to drive the at least two cleaning units to move in two motion modes respectively.

In an embodiment of the present disclosure, the transmission mechanism includes at least a first transmission unit and a second transmission unit, and the cleaning component includes at least a first cleaning unit and a second cleaning unit; the first transmission unit is configured to convert the initial motion into a first motion to drive the first cleaning unit to perform a first cleaning action; the second transmission unit is configured to convert the initial motion into a second motion or transmits the initial motion to the second cleaning unit, to drive the second cleaning unit to perform a second cleaning action; and the first cleaning unit and the second cleaning unit have different motion modes.

In an embodiment of the present disclosure, the first motion and the second motion have at least one of the following differences: different motion paths, different motion frequencies, different reciprocating motion angles, and different motion strokes.

In an embodiment of the present disclosure, the first transmission unit and the second transmission unit are integrally formed or are assembled together to form the transmission mechanism.

In an embodiment of the present disclosure, the first transmission unit and the second transmission unit are connected to the driving unit for performing transmission, and the first transmission unit and the second transmission unit are configured to perform transmission independently of each other.

In an embodiment of the present disclosure, the motion path includes but is not limited to: a pivot path, a reciprocating rotation path, a tapping motion path, a reciprocating vibration path, a reciprocating sweeping path, a transverse linear motion, a longitudinal linear motion, and/or a pendulum motion. The pivot path is a path for rotating around a fulcrum or a pivot axis, the tapping motion path is a motion trajectory of a tapping point during a process of moving from a starting point to a contact point, the transverse linear motion is a transverse motion based on an extension axis of the personal care device or the driving unit, and the longitudinal linear motion is a longitudinal motion based on the extension axis of the personal care device or the driving unit.

In an embodiment of the present disclosure, the cleaning component further includes one or more receiving units that cooperate with the transmission mechanism, and the one or more receiving units are driven by the transmission mechanism to drive one or more cleaning units to perform cleaning actions.

The personal care device according to the present disclosure includes a cleaning component, a grip component, and a transmission mechanism, the transmission mechanism converts the initial motion outputted from the driving unit for at least one cleaning unit, so that at least two cleaning units can move in two motion modes, thereby achieving deep and efficient cleaning of various cleaning surfaces/grooves and other regions in the oral cavity, thus meeting the diverse cleaning needs of the oral cavity.

The cleaning unit according to the present disclosure can realize multi-mode motion mode, achieving efficient and comprehensive cleaning.

The other features and advantages of the present disclosure will become clear through a detailed description of the exemplary embodiments of the present disclosure with reference to the drawings.

### BRIEF DESCRIPTION OF THE DRAWINGS

Figure 1 is a diagram of modules of a personal care device according to an embodiment of the present disclosure;
Figure 2 is a schematic diagram of a partial structure of a personal care device according to an embodiment of the present disclosure;
Figure 3 is a schematic diagram of a motion state of a personal care device according to an embodiment of the present disclosure;
Figure 4 is a schematic diagram of a partial structure of a personal care device according to another embodiment of the present disclosure;
Figure 5 is a schematic diagram of a motion state of a personal care device according to another embodiment of the present disclosure;
Figure 6 is a schematic diagram of a partial structure of a personal care device according to another embodiment of the present disclosure;
Figure 7 is a schematic diagram of a motion state of a personal care device according to another embodiment of the present disclosure;
Figure 8 is a schematic diagram of a partial structure of a personal care device according to another embodiment of the present disclosure;
Figure 9 is a schematic diagram of a motion state of a personal care device according to another embodiment of the present disclosure;
Figure 10 is a schematic diagram of a motion state of a personal care device according to another embodiment of the present disclosure; and
Figure 11 is a schematic diagram of a structure of a grip component of a personal care device according to another embodiment of the present disclosure.

1- Cleaning component; 11- First cleaning unit; 12- Second cleaning unit; 2- Grip component; 3- Brush head body; 41- First transmission unit; 42- Second transmission unit; 5-Limiting component; 6-Rotating shaft; 7-Eccentric cylinder; 8-Spring; 9-Servo motor; 10-Main control board; 13- Battery; 14- Button.

### DETAILED DESCRIPTION OF EMBODIMENTS

A personal care device is provided according to the present disclosure, which includes a cleaning component, a grip component, and a transmission mechanism. The grip component is constructed to be suitable for gripping, which may include a housing and a driving unit, a control unit, and other parts such as a circuit board and a power supply arranged in the housing. The cleaning component includes at least two cleaning units, the cleaning unit may be, for example, a brush head or another device with the care function.

The cleaning component is constructed to be installed together with the grip component, so that the cleaning unit can be connected to the driving unit through the transmission mechanism. The cleaning component is installed on the grip component, for example, in a detachable manner, so that the cleaning component may be replaced if the cleaning component wears out or reaches the end of its service life. The driving unit is configured to output an initial motion in response to one or more control signals sent by the control unit, and convert the initial motion outputted by the driving unit into a motion having a different motion mode from the initial motion through the transmission mechanism for at least one cleaning unit. The transmission mechanism also converts the initial motion outputted by the driving unit into a motion having a different motion mode from the initial motion for at least another cleaning unit, or directly transmits the initial motion to the at least another cleaning unit, to drive the at least two cleaning units to move in two motion modes respectively, so that the at least two cleaning units perform cleaning actions respectively. At least two of the multiple cleaning units have different motion modes and thus correspond different cleaning actions, and at least one cleaning unit has a motion mode different from that of the initial motion.

The motion mode according to the present disclosure refers to a form, a state, a posture, or a pattern that the cleaning unit moves, for example, in different motion directions, different motion modes, different motion parameters. All the motions as long as two cleaning units do not maintain exactly the same motion mode simultaneously are within the scope of the present disclosure and will not be listed in detail here.

In an embodiment of the present disclosure, the transmission mechanism is further configured to transmit the initial motion to one or more of the at least two cleaning units, to drive the one or more cleaning units to perform cleaning actions. Specifically, the transmission mechanism may also perform motion transmission without converting the motion mode of the initial motion, so that one or more cleaning units in the at least two cleaning units maintain the same motion mode as the initial motion to perform cleaning actions. Therefore, among the cleaning units included in the cleaning component, at least one cleaning unit performs a cleaning action in a motion mode different from the initial motion, and at least one cleaning unit performs a cleaning action in the same mode as the initial motion, so that the two cleaning units have different motion modes, thereby providing deep and adaptive cleaning for the oral cavity of the user.

In an embodiment, the transmission mechanism converts the initial motion of the driving unit into at least one identical or different target motion having a different motion mode from the initial motion, to drive at least one cleaning unit to perform a cleaning action, where the motion mode of the at least one cleaning unit is different from that of the initial motion. In addition, the transmission mechanism also directly transmits the initial motion of the driving unit to another cleaning unit, the number of which may be one or more, to drive the other cleaning unit to perform a cleaning action. The other cleaning unit has the same motion mode as the initial motion. In another embodiment, the transmission mechanism converts the initial motion of the driving unit into at least two different target motions, thereby driving at least two cleaning units to perform different cleaning actions. The motion modes of the at least two cleaning units are different from that of the initial motion and also different from each other.

Compared with the conventional art of using a single motion mode, the personal care device can simultaneously perform deep cleaning on different areas to be cleaned through cleaning units of different motion modes, solving the problem of cleaning blind spots or low cleaning efficiency caused by different positions and shapes of the areas to be cleaned, thus meeting the diverse cleaning needs of users. In addition, a suitable motion mode may be selected based on the shape and position of an area to be cleaned, which not only improves cleaning efficiency and cleaning effect, but also improves the cleaning experience of the user.

The cleaning component according to present disclosure is as described above, which includes at least two cleaning units and a transmission mechanism. The transmission mechanism is connected to the cleaning units and converts the initial motion outputted by the driving unit into a motion having a different motion mode from the initial motion for at least one cleaning unit, so that at least two cleaning units move in two motion modes respectively.

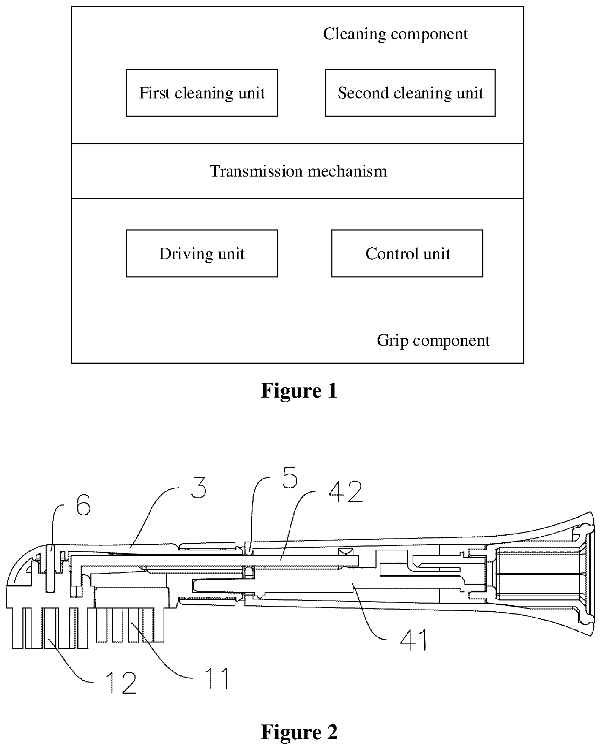

For ease of understanding, the specific structure and operating principle of the personal care device and the cleaning component according to the present disclosure will be described in detail with reference to Figures 1 to 11, in conjunction with an embodiment. The personal care device according to the present disclosure may be an electric toothbrush, a massager, a facial cleaner, or another personal care device well-known to those skilled in the art.

As shown in Figure 1, the personal care device according to the present disclosure includes a cleaning component, a grip component, and a transmission mechanism.

The cleaning component according to the present disclosure includes a cleaning component body and at least two cleaning units arranged on the cleaning component body, at least two cleaning units may clean the same area to be cleaned or different areas to be cleaned. The user may grip the grip component in a stationary or moving manner, and the cleaning unit may perform continuous or discontinuous cleaning on a surface to be cleaned. In the embodiment shown in Figure 1, there are two cleaning units, namely a first cleaning unit and a second cleaning unit. The first cleaning unit and the second cleaning unit are arranged on the cleaning component body, and have different motion modes on the cleaning component body.

In an embodiment where the personal care device according to the present disclosure is an electric toothbrush, the cleaning unit is a brush head unit provided with bristles, and the brush head units may operate independently or collaboratively to clean different tooth surfaces and gaps. The design and arrangement of bristles can optimize the cleaning effect, and bristles of different hardness or shapes may also be used to meet different cleaning needs, which is not specifically limited in the present disclosure. In a case that the personal care device according to the present disclosure is a facial massager or a fascia gun, the cleaning unit is a movable massage head, and soft material may be provided on the surface of the massage head to avoid damaging the skin of the user during cleaning.

The motion mode according to the present disclosure refers to a form, a state, a posture, or a pattern of a motion, which may be different in motion direction, motion mode, motion parameter, etc. For example, the first cleaning unit is rotatably connected to the cleaning component body and may rotate around its central axis on the cleaning component body, the second cleaning unit is constructed to be able to move in a straight line along the cleaning component body, which makes the two cleaning units have different motion postures. For example, the first cleaning unit and the second cleaning unit are both rotatably connected to the cleaning component body, but the two cleaning units have different rotation directions or rotation speeds. For example, the first cleaning unit and the second cleaning unit are constructed to swing on the cleaning component body, but the two cleaning units have different swing directions, different swing amplitudes or different swing frequencies. All motions as long as the two cleaning units do not maintain exactly the same motion mode is within the scope of the present disclosure and will not be listed in detail here.

Continually referring to Figure 1, the grip component may include a housing and other components such as a driving unit, a control unit, a circuit board and a power supply arranged in the housing. The driving unit is configured to output an initial motion in response to one or more control signals sent by the control unit. The cleaning component is constructed to be installed together with the grip component through a transmission mechanism, so that the cleaning unit can be connected to the driving unit through the transmission mechanism. The transmission mechanism is connected to the driving unit of the grip component, and in an embodiment, the transmission mechanism may be detachably installed on the driving shaft of the driving unit through a structure such as a fastener. In addition, the transmission mechanism may be arranged inside the cavity of the cleaning component body, and extend in the cavity to cooperate with the cleaning unit. In an embodiment, some parts of the transmission mechanism may be arranged on the cleaning unit or assembled together with the cleaning unit, for example, arranged on a side or a back plate opposite to the cleaning surface of the cleaning unit. In an embodiment of the present disclosure, the cleaning component is installed on the grip component, for example, in a detachable manner, so that the cleaning component can be replaced when the cleaning component wears out or reaches the end of its service life.

Specifically, the grip component is a part used for the user to grip, and the grip component includes a driving unit and a control unit arranged therein. The driving unit is configured to generate an original power output, and the control unit is configured to receive a user input (for example, a switch button operation) or a preset program, and generate a control signal based on the user input or the preset program to control an operating state and a mode of the driving unit.

The transmission mechanism according to the present disclosure is connected to the cleaning units and configured to convert an initial motion outputted by the driving unit for at least one cleaning unit, so that at least two cleaning units move in two motion modes respectively.

The driving unit converts the outputted initial motion into a motion having a different motion mode from the initial motion through the transmission mechanism and transmits it to at least one cleaning unit, and converts the outputted initial motion into a motion having a different motion mode from the initial motion through the transmission mechanism and transmits it to at least one other cleaning unit or directly transmits the outputted initial motion to the at least one other cleaning unit, so that at least two cleaning units move in two motion modes respectively. Specifically, the transmission mechanism transmits and converts the initial motion outputted by the driving unit for the cleaning units, so that the cleaning units move in two motion modes, such as a rotational motion or a reciprocating motion, thereby achieving a comprehensive cleaning effect.

Compared with the conventional art of using a single motion mode, the personal care device can simultaneously perform deep cleaning on different areas to be cleaned through cleaning units of different motion modes, solving the problem of cleaning blind spots or low cleaning efficiency caused by different positions and shapes of the areas to be cleaned, thus meeting the diverse cleaning needs of users. In addition, a suitable motion mode can be selected based on the shape and position of an area to be cleaned, which not only improves cleaning efficiency and cleaning effect, but also improves the cleaning experience of the user.

The oral cavity of the human body has a complex structure, including various areas such as the tooth flank, the chewing surface, and gaps. Due to different factors such as surface shapes, positions, and spatial limitations of teeth, in order to achieve a good cleaning effect, these areas have diverse and specific requirements on brush head shapes and cleaning motion modes. At present, a mainstream electric toothbrush mainly achieves comprehensive cleaning in multiple areas through a combination design of bristle clusters of a single brush head or by providing multiple specific brush head components. However, the former way still has limited contact effect in particularly narrow crevice areas, while the latter way requires replacing cleaning components during the cleaning process, which is cumbersome and complex, and cannot meet the comprehensive and efficient cleaning needs of different areas of the oral cavity.

In an embodiment according to the present disclosure, the cleaning component further includes one or more receiving units that cooperate with the transmission mechanism. The one or more receiving units are connected to one or more cleaning units and are driven by the transmission mechanism to drive one or more cleaning units to perform cleaning actions. Specifically, the transmission mechanism converts the initial motion into one or more target motions and outputs the same to the receiving unit, the receiving unit is driven by the target motions to drive the cleaning unit to move. However, the transmission mechanism may also output the initial motion to the receiving unit, the receiving unit is driven by the initial motion to drive the cleaning unit to perform the cleaning action. The receiving unit may adjust the power received from the transmission mechanism according to the characteristics and requirements of the cleaning unit. In a case that the cleaning component includes multiple cleaning units, the receiving unit is also responsible for coordinating the motions among these units to ensure that they can operate synchronously and complete the cleaning task together, to achieve a composite motion mode. The receiving unit may be customized for different users or cleaning needs, providing a more personalized and targeted cleaning experience.

In an embodiment according to the present disclosure, the transmission mechanism transmits the initial motion generated by the driving unit to one of the multiple cleaning units, which performs a specific cleaning action according to a specific motion state, thereby not only improving the cleaning effect, but also ensuring the safety and comfort of use. Referring to Figure 2, in an embodiment according to the present disclosure, the transmission mechanism includes at least a first transmission unit 41 and a second transmission unit 42, and the cleaning component 1 includes at least a first cleaning unit 11 and a second cleaning unit 12. The first transmission unit 41 converts the initial motion into a first motion to drive the first cleaning unit 11 to perform the first cleaning action; converts the initial motion into a second motion or transmit the initial motion to the second cleaning unit 12, to drive the second cleaning unit 12 to perform a second cleaning action. The first cleaning unit 11 and the second cleaning unit 12 have different motion modes. In an example, the motion mode of the first motion is different from that of the initial motion, and/or the motion mode of the second motion is different from that of the initial motion. In another example, the motion mode of the first cleaning unit 11 is different from that of the initial motion, and/or the motion mode of the second cleaning unit 12 is different from that of the initial motion.

Specifically, the first transmission unit 41 receives the initial motion from the driving unit, the first transmission unit 41 may be, but is not limited to, a connecting rod, a gear, a lever, a screw, a chain, a spring, or other structures. The first transmission unit 41 converts the initial motion into a first motion suitable for the first cleaning unit 11 to meet a specific cleaning need. Similarly, the second transmission unit 42 also receives the same initial motion and converts it into a second motion or directly transmits it to the second transmission unit 42, to drive the second cleaning unit 12.

The transmission mechanism converts or transmits the initial motion generated by the driving unit for different cleaning units, to drive the cleaning units to perform motions in different motion modes. Even if the driving unit only provides a single initial motion, the transmission mechanism can still drive the first cleaning unit 11 and the second cleaning unit 12 to perform a first cleaning action and a second cleaning action most suitable for the cleaning need through differentiated designs of the first transmission unit 41 and the second transmission unit 42. For example, the first cleaning unit 11 may be designed to perform cleaning action at a higher frequency and a smaller amplitude to clean sensitive tooth areas, while the second cleaning unit 12 may perform cleaning action at a lower frequency and a larger amplitude to clean hard plaque, ensuring that the device can efficiently and targetedly clean different areas of the oral cavity.

In an embodiment according to the present disclosure, the first transmission unit 41 and the second transmission unit 42 are integrally formed or assembled together to form the transmission mechanism.

Specifically, in a case that the first transmission unit 41 and the second transmission unit 42 are integrally formed, it can provide better structural stability and accuracy, so that assembly errors and relative motion between parts can be reduced, thereby reducing noise and energy loss. In a case that the first transmission unit 41 and the second transmission unit 42 are assembled to form the transmission mechanism, the first transmission unit 41 and the second transmission unit 42 are assembled together through interfaces or connectors to form a complete transmission mechanism, which can improve the flexibility of the transmission mechanism, and the transmission units can be independently optimized to meet specific functional requirements or space limitations. In addition, joint assembly is also convenient for maintenance and component replacement, and damaged units can be replaced separately without having to replace the entire transmission mechanism.

In an embodiment according to the present disclosure, the first transmission unit 41 and the second transmission unit 42 are connected to the driving unit for transmission, and the first transmission unit 41 and the second transmission unit 42 are configured to perform transmission independently of each other.

Specifically, both the first transmission unit 41 and the second transmission unit 42 are directly connected to the driving unit, and may independently receive power and control signals without being affected by each other, thus enabling independent motion adjustment. Due to the independent control of each transmission unit, the device can provide different cleaning modes for different cleaning units. For example, one cleaning unit may vibrate at a high frequency to remove stains on the surface of teeth, while another unit may clean the gaps between teeth at a low frequency with a large amplitude. The design of independent transmission enables the device to efficiently clean multiple cleaning points simultaneously, where cleaning action can be performed on each point independently, thereby improving overall cleaning efficiency.

In an embodiment according to the present disclosure, the initial motion is a reciprocating rotation, reciprocating vibration, or rotation around the extension axis of the driving shaft.

In an embodiment according to the present disclosure, the initial motion is in a multi-mode form, and includes but is not limited to: a x-y axis composite motion, a circumferential-axial composite motion, and two-circumferential composite motion, where the x-y axis composite motion is an independent or coordinated composite motion in an x-axis direction and a y-axis direction, the circumferential-axial composite motion is an independent or coordinated composite motion of a rotational motion and a displacement motion in a predetermined axis extension direction, and the two-circumferential composite motion includes motions along two circumferential paths.

Specifically, the initial motion outputted by the driving unit is in the multi-mode form, which refers to that the device can perform two or more different types of motion modes.

In the X-Y axis composite motion mode, the cleaning component 1 simultaneously moves in two vertical axes (such as the horizontal X axis and the vertical Y axis) instead of moving in one axis. This composite motion can mimic a natural rotation and an up and down movement of the wrist during manual brushing, which helps to thoroughly clean the gaps between teeth, while cleaning multiple surfaces of the teeth. The circumferential-axial composite motion mode combines rotational (circumferential) motion and linear (axial) motion. The cleaning component 1 rotates or oscillates back and forth to clean teeth, while also moving back and forth along the length direction (axial direction) of the teeth, mimicking the cleaning of the teeth in both a horizontal direction and in the up and down direction. The two-circumferential composite motion mode refers to the cleaning component 1 rotating on two different circumferential paths simultaneously. Multi-mode motion form can adapt to changes in different parts and different cleaning needs of the oral cavity, achieving efficient and thorough cleaning.

In an embodiment according to the present disclosure, the first motion and the second motion include at least one of the following differences: different motion paths, different motion frequencies, different reciprocating motion angles, and different motion strokes. In an embodiment according to the present disclosure, the motion modes of the first cleaning unit 11 and the second cleaning unit 12 include at least one of the following differences: different motion paths, different motion frequencies, different reciprocating motion angles, and different motion strokes. In an embodiment according to the present disclosure, the motion modes of the first cleaning action and the second cleaning action include at least one of the following differences: different motion paths, different motion frequencies, different reciprocating motion angles, and different motion strokes.

Specifically, the first motion and the second motion have different motion modes, the first cleaning unit 11 and the second cleaning unit 12 have different motion modes, and/or the first cleaning action and the second cleaning action have different motion modes, so that different cleaning units can move along different paths, move at different frequencies, perform reciprocating movements at different angles, and/or perform different strokes, to adapt to different positions and shapes of teeth. For example, referring to Figure 2, the second cleaning unit 12 rotates along the outer surface of the teeth, while the first cleaning unit 11 moves linearly between the teeth to thoroughly clean the gaps between the teeth. The frequency of movement of the cleaning unit may be adjusted according to the characteristics of the cleaned area. For example, the first cleaning unit 11 may vibrate at a higher frequency to effectively remove stains on the surface of teeth, while the second cleaning unit 12 may operate at a lower frequency to avoid irritation to sensitive gums. The reciprocating motion angle refers to a maximum angle at which the cleaning unit swings or rotates during a reciprocating motion. The first cleaning unit 11 and the second cleaning unit 12 have different reciprocating motion angles, which can better adapt to the cleaning needs of different parts. For example, cleaning the surface of teeth may require a smaller angle, while cleaning the gaps between teeth may require a larger angle. The motion stroke refers to an area cleaned by the cleaning unit in a single motion, and different cleaning units have different motion strokes to ensure that all areas that need to be cleaned are fully cleaned. For example, the first cleaning unit 11 may have a longer stroke to clean longer tooth surfaces, while the second cleaning unit 12 may have a shorter stroke to focus on specific small areas.

By separately setting the motion modes of the first motion and the second motion, the first cleaning unit 11 and the second cleaning unit 12, and/or the first cleaning action and the second cleaning action, diverse cleaning needs in the oral cavity are achieved, providing a more efficient, mild, and comprehensive oral cleaning experience, thus meeting the personalized needs of different users.

In an embodiment according to the present disclosure, the motion path includes but is not limited to: a pivot path, a reciprocating rotation path, a tapping motion path, a reciprocating vibration path, a reciprocating sweeping path, a transverse linear motion, a longitudinal linear motion, and/or a pendulum motion. The pivot path is a path for rotating around a fulcrum or a pivot axis, the tapping motion path is a motion trajectory of a tapping point during a process of moving from a starting point to a contact point, the transverse linear motion is a transverse motion based on an extension axis of the personal care device, the driving unit or the driving shaft, and the longitudinal linear motion is a longitudinal motion based on the extension axis of the personal care device, the driving unit or the driving shaft.

Specifically, the pivot path is a path for rotating around a fulcrum or a pivot axis, which can mimic rotation of the wrist during manual brushing, facilitating cleaning various surfaces of teeth. The reciprocating rotation path refers to the cleaning unit rotating back and forth around a central point, which can penetrate deep into the gaps between teeth, effectively removing trapped food residue and dental plaque. The tapping motion path refers to the cleaning unit quickly moving from a tapping point to a contact point, producing a slight tapping sensation, which can loosen stubborn plaque and tartar, and is suitable for cleaning posterior teeth and chewing surfaces. The reciprocating vibration path is a high-frequency and small-angle vibration path, which refers to that the cleaning unit vibrates rapidly back and forth along a predetermined direction. This high-frequency vibration can promote the production of detergent foam, increasing the contact area between the detergent and the tooth surface, improving the cleaning efficiency. The reciprocating sweeping path is a low-frequency and large angle sweeping path, which refers to the cleaning unit sweeping back and forth within a range, similar to a traverse sweeping action during manual brushing, and can clean the outer and inner sides of teeth. The traverse linear motion refers to a traverse movement of the cleaning unit along the extension axis of the toothbrush, which is suitable for cleaning the occlusal surface and top of teeth, facilitating removing dirt from flat areas. The longitudinal linear motion refers to a longitudinal movement of the cleaning unit along the extension axis of the toothbrush, which can penetrate deep into the gaps between teeth and clean residues in the gaps. The pendulum motion refers to the cleaning unit swinging back and forth at a certain angle like a pendulum. This motion can simulate the professional cleaning technique of a dentist, providing comprehensive and gentle cleaning of teeth. Different movement paths can provide more efficient cleaning effects for different parts and cleaning needs of teeth and oral cavity.

The personal care device according to the present disclosure is applied to electric toothbrushes in the oral field. At least two cleaning units move in two motion modes, which can achieve deep and efficient cleaning of various cleaning surfaces/grooves and other areas in the oral cavity, thereby meeting the diverse cleaning needs inside the oral cavity, thus achieving efficient and comprehensive cleaning. For ease of description, the structure and operating principle of the personal care device according to the present disclosure is described in detail by taking an electric toothbrush as an example.

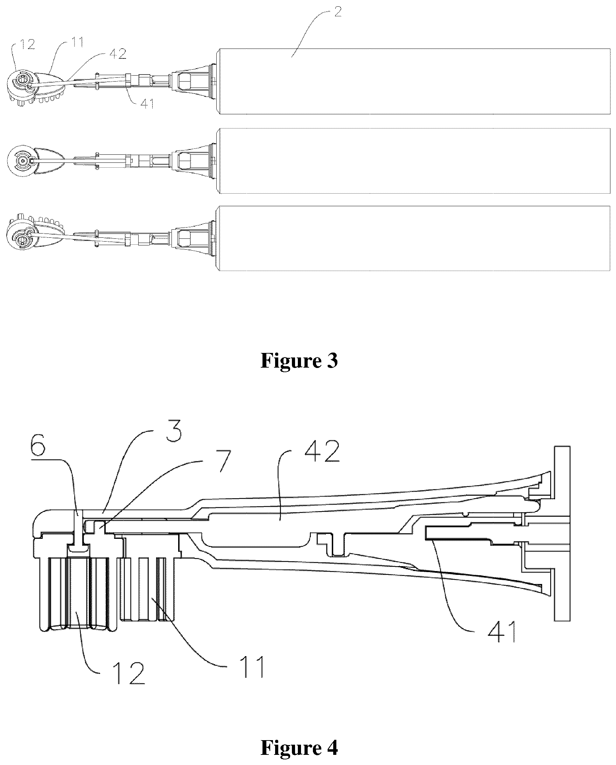

Figures 2 and 3 illustrate an embodiment of an electric toothbrush according to the present disclosure. In Figures 2 and 3, the electric toothbrush according to the present disclosure includes a cleaning component 1, a grip component 2, and a transmission mechanism. The cleaning component 1 includes a brush head body 3 and a first cleaning unit 11 and a second cleaning unit 12 arranged on the brush head body 3. The second cleaning unit 12 is rotatably connected to the brush head body 3 through a rotating shaft 6. The transmission mechanism includes a first transmission unit 41 and a second transmission unit 42. The first transmission unit 41 extends from the cavity of the cleaning component 1 to the brush head body 3, and is driven by a power source to drive the first cleaning unit 11 on the brush head body 3 to vibrate. The brush head body 3, as a receiving unit, is driven by the motion outputted by the first transmission unit 41 to drive the first cleaning unit 11 to vibrate. A limiting component 5 is provided inside the cleaning component 1 for limiting the second transmission unit 42. With the limiting component 5 as a boundary, one end of the second transmission unit 42 extends inside the cleaning component 1 to cooperate with the first transmission unit 41, and the other end extends inside the brush head body 3 to eccentrically cooperate with the second cleaning unit 12. The first transmission unit 41 vibrates under the action of the power source, which in turn drives the first cleaning unit 11 to oscillate back and forth. When the first transmission unit 41 drives one end of the second transmission unit 42 to vibrate, the other end of the second transmission unit 42 drives the second cleaning unit 12 to rotate back and forth around the rotating shaft 6.

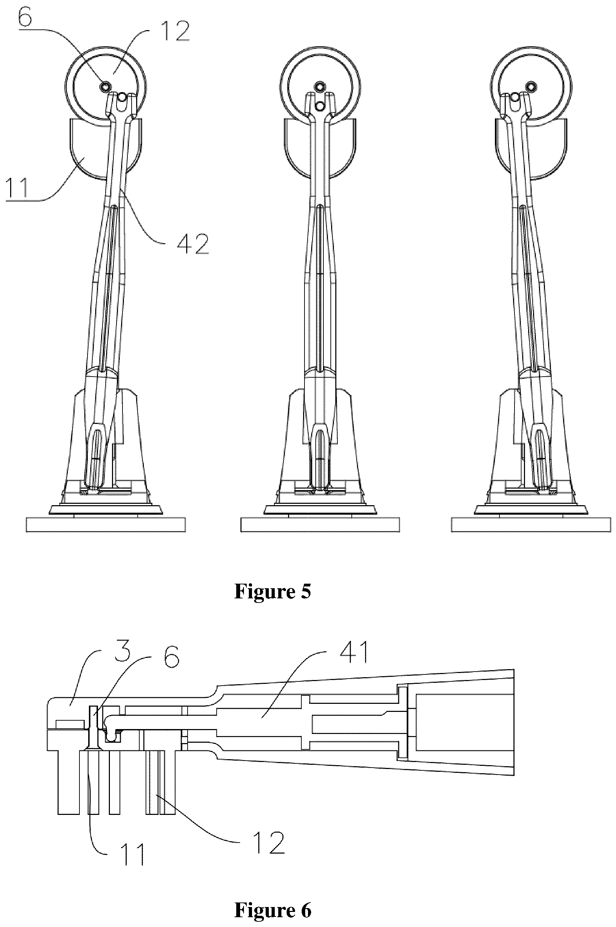

Figures 4 and 5 illustrate an embodiment of an electric toothbrush according to the present disclosure. In Figures 4 and 5, the electric toothbrush according to the present disclosure includes a cleaning component 1, a grip component 2, and a transmission mechanism. The cleaning component 1 includes a brush head body 3 and a first cleaning unit 11 and a second cleaning unit 12 arranged on the brush head body 3. The opposite ends of the brush head body 3 are respectively referred to as a first end and a second end. The first cleaning unit 11 and the second cleaning unit 12 are arranged on the first end of the brush head body 3, and the second cleaning unit 12 is rotatably connected to the brush head body 3 through a rotating shaft 6. The transmission mechanism includes a first transmission unit 41 and a second transmission unit 42. The first transmission unit 41 is fixed on the brush head body 3 and is controlled by an external vibration source to drive the brush head body 3 to vibrate. The second transmission unit 42 is connected to the first transmission unit 41, with a connection point between the first transmission unit 41 and the second transmission unit 42 as a boundary, one end of the second transmission unit 42 is constructed to extend towards the first end of the brush head body 3 until it is eccentrically connected to the second cleaning unit 12 through the eccentric cylinder 7, while the other end extends towards the second end of the brush head body 3 to cooperate with a limiting component correspondingly set on the grip component 2. The first transmission unit 41 is controlled by an external vibration source to drive the brush head body 3 to vibrate, while driving the first cleaning unit 11 to oscillate back and forth and driving the second transmission unit 42 to vibrate, and then the second transmission unit 42 drives the second cleaning unit 12 to rotate back and forth within a predetermined angle through the eccentric cylinder 7.

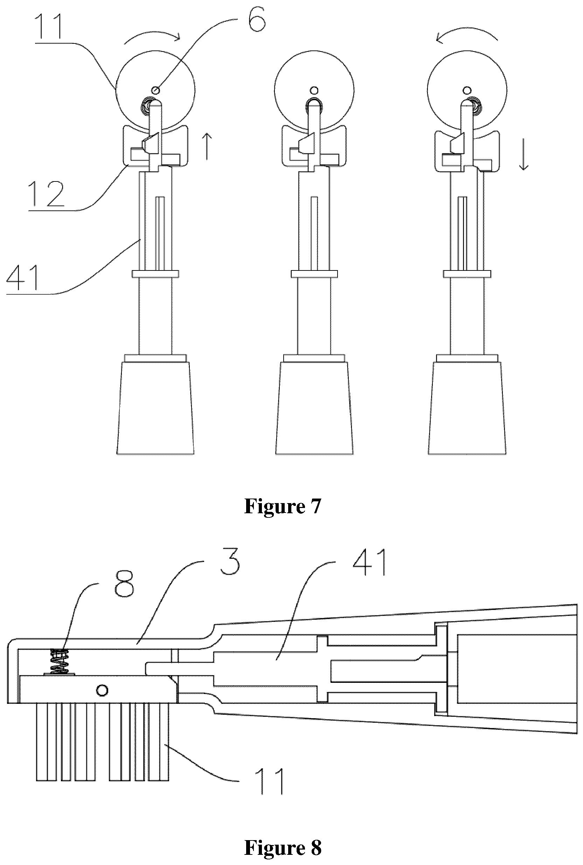

Figures 6 and 7 illustrate an embodiment of an electric toothbrush according to the present disclosure. In Figures 6 and 7, the electric toothbrush according to the present disclosure includes a cleaning component 1, a grip component 2, and a transmission mechanism. The cleaning component 1 includes a brush head body 3 and a first cleaning unit 11 and a second cleaning unit 12 arranged on the brush head body 3. The opposite ends of the brush head body 3 are respectively referred to as a first end and a second end. The first cleaning unit 11 and the second cleaning unit 12 are arranged on the first end of the brush head body 3. The first cleaning unit 11 is connected to the brush head body 3 through a rotating shaft 6, and the second cleaning unit 12 is slidedly cooperated on the brush head body 3 in a straight line. The transmission mechanism includes a first transmission unit 41, which is rotatably connected to the brush head body 3. During the reciprocating rotation relative to the brush head body 3, the first transmission unit 41 drives the first cleaning unit 11 to rotate back and forth. In addition, the second cleaning unit 12 is driven to move back and forth linearly on the axis of the brush head body 3 through stoppers on both sides of a rod body of the first transmission unit 41.

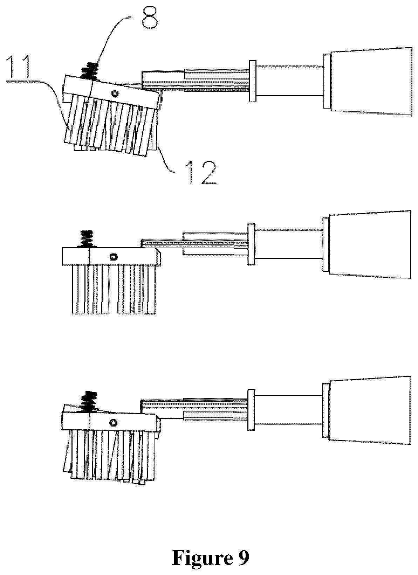

Figures 8 and 9 illustrate an embodiment of an electric toothbrush according to the present disclosure. In Figures 8 and 9, the electric toothbrush according to the present disclosure includes a cleaning component 1, a grip component 2, and a transmission mechanism. The cleaning component 1 includes a brush head body 3 and a first cleaning unit 11 and a second cleaning unit 12 arranged on the brush head body 3. The first cleaning unit 11 and the second cleaning unit 12 are hinged on the brush head body 3. Taking a hinge point of the first cleaning unit 11 and the second cleaning unit 12 on the brush head body 3 as a boundary, the opposite ends of the first cleaning unit 11 and the second cleaning unit 12 are respectively referred to as a first end and a second end. The first end of the first cleaning unit 11 and the second cleaning unit 12 are pre-pressed on the brush head body 3 by a spring 8. The transmission mechanism includes a first transmission unit 41, which extends within the brush head body 3 to cooperate with the second end of the first cleaning unit 11 and the second cleaning unit 12. During the reciprocating rotation of the first transmission unit 41 in the brush head body 3, the first transmission unit 41 alternately applies deflection torque to the second end of the first cleaning unit 11 and the second cleaning unit 12, to convert the reciprocating rotation into deflection pressure, so that the first cleaning unit 11 and the second cleaning unit 12 can reciprocate and deflect within the brush head body 3.

As shown in Figure 1, in an embodiment of the present disclosure, the personal care device further includes: a control unit configured to determine a driving parameter in response to a trigger signal, and the driving unit is configured to output an initial motion based on the driving parameter determined by the control unit.

Specifically, the trigger signal originates from an operation of a user, which may be an operation of the user starting or adjusting mode through a joystick button/app, or starting or adjusting modes based on sensing of a sensor, and the like. The trigger signal is an initial indication of a device being started or changing an operating mode. After receiving the trigger signal, the control unit parses the trigger signal and determines the driving parameter according to a preset program or algorithm. The driving parameter is used by the driving unit to output the initial motion. The driving unit outputs the initial motion based on the driving parameter received from the control unit. The user may choose or adjust the cleaning mode and generate a trigger signal, and the control unit determines the driving parameter based on the trigger signal, ensuring the cleaning effect while allowing personal care device to adapt to oral conditions and personal preferences of different users, thus providing a personalized and efficient cleaning experience.

In an embodiment according to the present disclosure, the driving unit includes a driving shaft, and the driving parameter includes but is not limited to: a rotation angle of the driving shaft, a rotation direction of the driving shaft, a reciprocating rotation frequency of the driving shaft, and/or a target position of the driving shaft.

Specifically, the driving unit converts electrical energy into mechanical motion to drive the cleaning component 1 to complete the cleaning action. The driving parameter includes but is not limited to a rotation angle, a rotation direction, a reciprocating rotation frequency, and a target position of the driving shaft.

The rotation angle of the driving shaft is a size of an angle at which the driving shaft rotates each time, and the size of the rotation angle of the driving shaft may affect the cleaning range and cleaning mode of the cleaning unit. For example, rapid continuous rotation with a small angle is suitable for fine cleaning, while rotation with a large angle may be used to remove stubborn stains. The driving shaft may rotate forward or backward, or alternately rotate between forward and reverse directions. Different combinations of rotation directions may produce different cleaning effects, for example, forward rotation may deeply clean the gaps between teeth, and reverse rotation may help loosen and remove dental plaque. The reciprocating rotation frequency of the driving shaft refers to the number of times the driving shaft rotates in both directions per unit time, which may be selected based on the consideration of the mildness of cleaning teeth and gum while ensuring the cleaning effect. The target position of the driving shaft refers to the position of the driving shaft during rotation and/or stretching, which can ensure that the cleaning unit can accurately reach or fully clean every part that needs to be cleaned.

By adjusting the driving parameters, the control unit can precisely control the motion of the driving shaft, thereby enabling the cleaning unit to perform efficient cleaning action. For example, in sensitive tooth areas, the control unit sets a lower rotation frequency and smaller rotation angle, while in areas that require strong cleaning, a higher frequency and larger rotation angle are used. Combining user needs with intelligent algorithms of the device, the personal care device can provide both efficient and comfortable cleaning experiences.

In an embodiment according to the present disclosure, the initial motion is a periodic motion, which includes different motion combinations with at least one or more of the following parameters: a rotation angle of the driving shaft, a rotation direction of the driving shaft, and a reciprocating rotation frequency of the driving shaft.

Specifically, in the periodic motion, the rotation angle of the driving shaft may vary periodically. For example, the device may rotate rapidly at a small angle in one cycle, and increase the rotation angle in the next cycle to clean the cleaning area more comprehensively, which helps to flexibly switch between meticulous cleaning and deep cleaning. Periodic changing of the rotation direction of the driving shaft, such as switching between forward and reverse directions, can enhance the cleaning effect. Periodic adjustment of the reciprocating rotation frequency of the driving shaft can provide different levels of cleaning intensity at different time periods. For example, a higher frequency is adopted at the beginning of cleaning to quickly remove surface dirt, and then the frequency is reduced to handle sensitive areas more gently.

By the periodic motion combining different types motions, not only the comprehensiveness and efficiency of cleaning are improved, but also tooth wear and gum irritation that may occur due to long-term high-intensity cleaning are reduced, achieving both cleaning and protection.

At present, the mainstream electric toothbrush mainly uses an open-loop direct drive control motor (an eccentric wheel motor, a sonic motor, a linear motor, etc.) to drive the cleaning brush head to achieve high-frequency reciprocating oscillation or reciprocating rotation of the cleaning components for oral cleaning.

An electric toothbrush with a composite motion mode usually has one or more cleaning units on a single brush head. The brush head body 3 and the combined cleaning units perform left and right reciprocating swinging, tapping, rotation, left and right or up and down movement/swinging and the like to achieve a combination of cleaning motions. Generally, the open-loop drive motor such as an eccentric wheel motor, a sonic motor, or a linear motor is used for providing independent or pairwise combined motion, which is transmitted to various cleaning units on the brush head by structures such as a connecting rod and a crankshaft to achieve combined motion.

Due to the limitation of the control principle of the motor in open-loop drive mode, the motion amplitude cannot be precisely controlled, the motion range cannot be flexibly adjusted, and the load resistance ability is poor (the motion attenuation is large under a high load condition in open-loop control). The power mode transmitted by a single motor is single, and although the composite-structure brush head has multiple motion forms, the weak load resistance ability and low efficiency of the power transmission mechanism result in insufficient power and poor cleaning effect in the final composite motion, and the fixed control mode cannot achieve dynamic adjustment. The combination of multiple motors brings about the problem of multiple motion modes that cannot achieve precise synchronous control, resulting in a decrease in regional cleaning efficiency. Therefore, the current solution does not fundamentally achieve the optimal multi-mode combination cleaning.

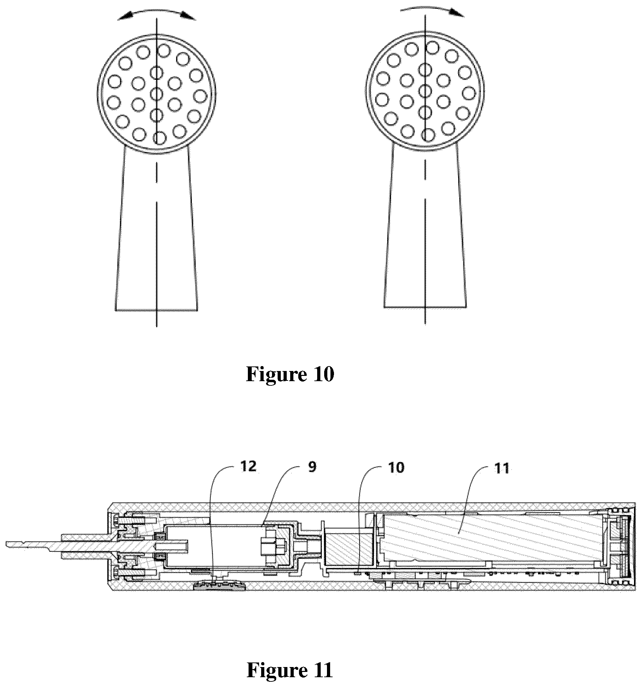

As shown in Figure 11, in an embodiment of the present disclosure, the driving unit includes a servo motor 9 and a driving shaft. The servo motor is arranged at the front end of the grip component 2 to drive the driving shaft to output power. A main control board 10 is provided with an MCU to provide control signals for the servo motor 9, a battery 13 is used to provide power, and a button 14 is set with multiple gears to reflect user needs and transmit signals to the MCU. The cleaning component 1 is sleeved on the driving shaft and receives power outputted from the servo motor 9 through a built-in transmission mechanism in conjunction with the driving shaft. In this embodiment, based on the closed-loop motion control characteristics of the servo motor 9 and the design of the multi-mode cleaning component, a multi-mode cleaning component motion scheme is provided under various driving power modes of the servo motor 9, achieving efficient and comprehensive oral cleaning.

In an embodiment according to the present disclosure, the servo motor 9 may control the swing angle or rotation of the driving shaft, providing more choices for the design of the cleaning component 1. When the servo motor 9 moves at a high frequency swing angle, the cleaning component 1 may perform a swing angle motion for combining multiple moving parts as described above, or perform a high frequency swing angle motion for a single moving part. As shown in Figure 10, when the servo motor 9 rotates at a high frequency, the cleaning component 1 may perform various motion modes such as a high-frequency swing angle motion, a high-frequency circular rotation, etc. for a single moving part.

In an embodiment according to the present disclosure, the personal care device further includes a sensing unit, which is electrically connected to the control unit. The control unit is configured to adjust the driving parameter through the electrical signal of the sensing unit, so as to maintain the initial motion state of the driving unit.

Specifically, the sensing unit is responsible for monitoring the real-time state of the driving unit, including but not limited to a position, a velocity, an acceleration, etc. For the current position of the driving shaft, the sensing unit is a rotary encoder, a Hall sensor, etc., which can accurately measure the rotation angle or position of the shaft and convert these physical parameters into electrical signals. The control unit receives the electrical signals from the sensing unit, compares them with preset target values, and calculates errors. Based on an error signal, the control unit adjusts, based on control algorithms (such as PID control, fuzzy control, etc.), the driving parameters, such as motor voltage, a current, or a frequency, to correct the errors and maintain the state of the driving unit towards or at the set point. The feedback loop of closed-loop control allows the system to self-regulate and resist interference. When the system detects a deviation from the set point, the control unit immediately responds by adjusting the driving parameters to correct the deviation, thereby maintaining the stability and accuracy of the system.

When the system starts running, the control unit sets an initial motion state of the driving unit, such as a speed, a position, or a torque. The sensing unit continuously monitors an actual state, such as a current position of the driving shaft. The control unit compares the actual state with a set point, and adjusts, if there is a deviation, the driving parameter until the actual state matches the set point. The system continuously repeats the process of monitoring, comparing, and adjusting throughout the entire operation to ensure that the driving unit always maintains the required motion state. The closed loop control ensures high precision, stability, and efficiency of the system.

In addition, in this embodiment, the personal care device is further provided with a Hall sensor, which may measure a magnetic field strength for detecting a position or a speed of the motor. The Hall sensor may be combined with a closed-loop control system to provide more accurate control of the driving parameter. For example, by monitoring the actual position and speed of the motor, the system can adjust the frequency, swing angle, and speed in real time to ensure that each cleaning action achieves an optimal effect.

In an embodiment according to the present disclosure, the personal care device may also collect brushing habits, preferences, and health data of the user and analyze these data through machine learning algorithms, so as to provide a personalized cleaning solution for the user. For example, for a user who frequently consumes colored foods, the device may increase the swing angle and rotation speed to enhance the whitening effect. By adjusting the driving parameters and combining closed-loop control and sensor technologies, an efficient, safe, and personalized cleaning experience can be provided, which not only improves cleaning efficiency, but also ensures user comfort and health.

The personal care device according to the present disclosure includes a cleaning component, a grip component, and a transmission mechanism. The initial motion outputted by the driving unit is converted for at least one cleaning unit through the transmission mechanism, so that at least two cleaning units can move in two motion modes, thereby achieving deep and efficient cleaning of various cleaning surfaces/grooves and other areas of the oral cavity, thus meeting the diverse cleaning needs inside the oral cavity.

The cleaning component according to the present disclosure is as described above, which is connected to the driving unit in the grip component 2 for cleaning the oral cavity. The cleaning component includes at least two cleaning units and a transmission mechanism. The transmission mechanism is connected to the cleaning unit and converts the initial motion outputted by the driving unit for at least one cleaning unit, so that the at least two cleaning units can move in two motion modes respectively.

In an embodiment according to the present disclosure, the transmission mechanism includes at least a first transmission unit 41 and a second transmission unit 42, and the cleaning component 1 includes at least a first cleaning unit 11 and a second cleaning unit 12. The first transmission unit 41 converts the initial motion into the first motion, to drive the first cleaning unit 11 to perform a first cleaning action. The second transmission unit 42 converts the initial motion into a second motion or transmits the initial motion to the second cleaning unit 12, to drive the second cleaning unit 12 to perform a second cleaning action. The first cleaning unit 11 and the second cleaning unit 12 have different motion modes.

In an embodiment according to the present disclosure, the first motion and the second motion include at least one of the following differences: different motion paths, different motion frequencies, different reciprocating motion angles, and different motion strokes.

In an embodiment according to the present disclosure, the first transmission unit 41 and the second transmission unit 42 are integrally formed or assembled together to form the transmission mechanism.

In an embodiment according to the present disclosure, the first transmission unit 41 and the second transmission unit 42 are connected to the driving unit for transmission, and the first transmission unit 41 and the second transmission unit 42 are configured to perform transmission independently of each other.

In an embodiment according to the present disclosure, the motion path includes but is not limited to: a pivot path, a reciprocating rotation path, a tapping motion path, a reciprocating vibration path, a reciprocating sweeping path, a transverse linear motion, a longitudinal linear motion, and/or a pendulum motion. The pivot path is a path for rotating around a fulcrum or a pivot axis, the tapping motion path is a motion trajectory of a tapping point during a process of moving from a starting point to a contact point, the transverse linear motion is a transverse motion based on an extension axis of the personal care device or the driving unit, and the longitudinal linear motion is a longitudinal motion based on the extension axis of the personal care device or the driving unit.

In an embodiment according to the present disclosure, the cleaning component 1 further includes one or more receiving units that cooperate with the transmission mechanism. The one or more receiving units are driven by the transmission mechanism to drive one or more cleaning units to perform cleaning actions.

For specific embodiment of the cleaning component according to the present disclosure, reference may be made to the embodiments of the personal care device mentioned above, which will not be repeated here.

## Claims

1. A personal care device, comprising:
a cleaning component (1) comprising at least two cleaning units;
a grip component (2) comprising a driving unit and a control unit arranged therein, wherein the driving unit is configured to output an initial motion in response to one or more control signals sent by the control unit; and
a transmission mechanism attached to the driving unit, wherein the transmission mechanism is connected to the cleaning units, and configured to convert the initial motion outputted by the driving unit to at least one cleaning unit, to drive the at least two cleaning units to respectively move in two different motion modes.

2. The personal care device according to claim 1, wherein
the control unit is configured to determine a driving parameter in response to a trigger signal; and
the driving unit is configured to output the initial motion based on the driving parameter determined by the control unit.

3. The personal care device according to claim 1, further comprising a sensing unit, wherein the sensing unit is electrically connected to the control unit, and the control unit is configured to adjust a driving parameter in response to an electrical signal of the sensing unit, to maintain the driving unit at an initial motion state.

4. The personal care device according to claim 3, wherein the driving unit comprises a driving shaft, and the driving parameter comprises but is not limited to: a rotation angle of the driving shaft, a rotation direction of the driving shaft, a reciprocating rotation frequency of the driving shaft, and/or a target position of the driving shaft.

5. The personal care device according to claim 1, wherein the initial motion is in a multi-mode form, and comprises but is not limited to: a x-y axis composite motion, a circumferential-axial composite motion, and two-circumferential composite motion, wherein the x-y axis composite motion is an independent or coordinated composite motion in an x-axis direction and a y-axis direction, the circumferential-axial composite motion is an independent or coordinated composite motion of a rotational motion and a displacement motion in a predetermined axis extension direction, and the two-circumferential composite motion comprises motions along two circumferential paths.

6. The personal care device according to claim 1, wherein the transmission mechanism comprises at least a first transmission unit (41) and a second transmission unit (42), and the cleaning component (1) comprises at least a first cleaning unit (11) and a second cleaning unit (12);
the first transmission unit (41) is configured to convert the initial motion into a first motion to drive the first cleaning unit (11) to perform a first cleaning action;
the second transmission unit (42) is configured to convert the initial motion into a second motion or transmits the initial motion to the second cleaning unit (12), to drive the second cleaning unit (12) to perform a second cleaning action; and
the first cleaning unit (11) and the second cleaning unit (12) have different motion modes.

7. The personal care device according to claim 6, wherein the first motion and the second motion have at least one of the following differences: different motion paths, different motion frequencies, different reciprocating motion angles, and different motion strokes; and/or
the motion modes of the first cleaning unit (11) and the second cleaning unit (12) have at least one of the following differences: different motion paths, different motion frequencies, different reciprocating motion angles, and different motion strokes; and/or
motion modes of the first cleaning action and the second cleaning action have at least one of the following differences: different motion paths, different motion frequencies, different reciprocating motion angles, and different motion strokes.

8. The personal care device according to claim 6, wherein the first transmission unit (41) and the second transmission unit (42) are integrally formed or are assembled together to form the transmission mechanism.

9. The personal care device according to claim 6, wherein the first transmission unit (41) and the second transmission unit (42) are connected to the driving unit for performing transmission, and the first transmission unit (41) and the second transmission unit (42) are configured to perform transmission independently of each other.

10. The personal care device according to claim 7, wherein the motion path comprises but is not limited to: a pivot path, a reciprocating rotation path, a tapping motion path, a reciprocating vibration path, a reciprocating sweeping path, a transverse linear motion, a longitudinal linear motion, and/or a pendulum motion, wherein
the pivot path is a path for rotating around a fulcrum or a pivot axis,
the tapping motion path is a motion trajectory of a tapping point during a process of moving from a starting point to a contact point,
the transverse linear motion is a transverse motion based on an extension axis of the personal care device or the driving unit, and
the longitudinal linear motion is a longitudinal motion based on the extension axis of the personal care device or the driving unit.

11. The personal care device according to claim 1, wherein the cleaning component (1) further comprises one or more receiving units that cooperate with the transmission mechanism, and the one or more receiving units are driven by the transmission mechanism to drive one or more cleaning units to perform cleaning actions.

12. The personal care device according to claim 1, wherein the initial motion is a periodic motion, and the periodic motion comprises different motion combinations with at least one or more of the following parameters: a rotation angle of the driving shaft, a rotation direction of the driving shaft, and a reciprocating rotation frequency of the driving shaft.

13. A cleaning component (1) connected to a driving unit in a grip component (2) for cleaning oral cavity, wherein the cleaning component (1) comprises:
at least two cleaning units, wherein
a transmission mechanism is connected to the cleaning units and configured to convert an initial motion outputted by the driving unit for at least one cleaning unit, to drive the at least two cleaning units to move in two motion modes respectively.

14. The cleaning component (1) according to claim 13, wherein the transmission mechanism comprises at least a first transmission unit (41) and a second transmission unit (42), and the cleaning component (1) comprises at least a first cleaning unit (11) and a second cleaning unit (12);
the first transmission unit (41) is configured to convert the initial motion into a first motion to drive the first cleaning unit (11) to perform a first cleaning action;
the second transmission unit (42) is configured to convert the initial motion into a second motion or transmit the initial motion to the second cleaning unit (12), to drive the second cleaning unit (12) to perform a second cleaning action; and
the first cleaning unit (11) and the second cleaning unit (12) have different motion modes.

15. The cleaning component (1) according to claim 14, wherein the first motion and the second motion have at least one of the following differences: different motion paths, different motion frequencies, different reciprocating motion angles, and different motion strokes.

16. The cleaning component (1) according to claim 14, wherein the first transmission unit (41) and the second transmission unit (42) are integrally formed or are assembled together to form the transmission mechanism.

17. The cleaning component (1) according to claim 14, wherein the first transmission unit (41) and the second transmission unit (42) are connected to the driving unit for performing transmission, and the first transmission unit (41) and the second transmission unit (42) are configured to perform transmission independently of each other.

18. The cleaning component (1) according to claim 15, wherein the motion path comprises but is not limited to: a pivot path, a reciprocating rotation path, a tapping motion path, a reciprocating vibration path, a reciprocating sweeping path, a transverse linear motion, a longitudinal linear motion, and/or a pendulum motion, wherein
the pivot path is a path for rotating around a fulcrum or a pivot axis,
the tapping motion path is the motion trajectory of a tapping point during a process of moving from a starting point to a contact point,
the transverse linear motion is a transverse motion based on an extension axis of the personal care device or the driving unit, and
the longitudinal linear motion is a longitudinal motion based on the extension axis of the personal care device or the driving unit.

19. The cleaning unit (1) according to claim 13, wherein the cleaning component (1) further comprises one or more receiving units that cooperate with the transmission mechanism, and the one or more receiving units are driven by the transmission mechanism to drive one or more cleaning units to perform cleaning actions.
